(19) Europäisches Patentamt
European Patent Office
Office européen des brevets

(11) **EP 2 280 215 B1**

(12) **EUROPÄISCHE PATENTSCHRIFT**

(45) Veröffentlichungstag und Bekanntmachung des Hinweises auf die Patenterteilung:
**23.11.2016   Patentblatt 2016/47**

(51) Int Cl.:
***F21S 8/12*** *(2006.01)*          ***B60Q 1/04*** *(2006.01)*

(21) Anmeldenummer: **10450119.2**

(22) Anmeldetag: **19.07.2010**

(54) **LED-Kraftfahrzeugscheinwerfer zur Erzeugung einer dynamischen Lichtverteilung**

LED motor vehicle headlamp for generating dynamic light distribution

Phare de véhicule automobile à LED pour la production d'une répartition de lumière dynamique

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.07.2009   AT 12182009**

(43) Veröffentlichungstag der Anmeldung:
**02.02.2011   Patentblatt 2011/05**

(73) Patentinhaber: **ZKW Group GmbH**
**3250 Wieselburg (AT)**

(72) Erfinder:
• **Moser, Andreas**
**3350 Haag (AT)**

• **Krenn, Günther**
**3071 Böheimkirchen (AT)**
• **Plank, Josef**
**3251 Purgstall /Erlauf (AT)**
• **Böhm, Gerald**
**3370 Ybbs (AT)**

(74) Vertreter: **Patentanwaltskanzlei**
**Matschnig & Forsthuber OG**
**Biberstraße 22**
**Postfach 36**
**1010 Wien (AT)**

(56) Entgegenhaltungen:
**EP-A2- 1 818 599         EP-A2- 2 101 107**
**WO-A2-2004/007241     US-A1- 2003 147 252**
**US-A1- 2008 198 574**

EP 2 280 215 B1

**Beschreibung**

Die Erfindung betrifft einen LED-Kraftfahrzeugscheinwerfer zur Erzeugung einer dynamischen Lichtverteilung, mit einer Anzahl von LED-Lichtquellen, wobei eine LED-Lichtquelle jeweils aus zumindest einer Leuchtdiode und einem Primäroptikelement besteht, in welches Primäroptikelement die zumindest eine Leuchtdiode Licht einkoppelt, und wobei das eingekoppelte Licht zumindest teilweise aus einer Lichtaustrittsfläche des Primäroptikelementes wieder austritt, wobei die LED-Lichtquellen in zumindest zwei LED-Lichtquellen-Modulen angeordnet sind, wobei jedes LED-Lichtquellen-Modul zwei oder mehr LED-Lichtquellen umfasst, wobei jedes LED-Lichtquellen-Modul eine Sekundäroptik aufweist, welche die von den Lichtaustrittsflächen der Primäroptikelemente erzeugten Lichtsegmente - im in ein Fahrzeug eingebauten Zustand des Scheinwerfers - in einen vor dem Fahrzeug liegenden Bereich abbildet, wobei die Sekundäroptikelemente der LED-Lichtquellen-Module und die Anordnung der Lichtaustrittsflächen der Primäroptikelemente derart aufeinander abgestimmt sind, dass die Lichtsegmente aus den einzelnen LED-Lichtquellen-Modulen in horizontaler Richtung zueinander versetzt abgebildet sind, und zwar derart, dass sich eine Lichtverteilung durch entsprechende horizontale Überlagerung der einzelnen Lichtsegmente oder durch eine Aneinanderreihung und Überlagerung der einzelnen Lichtsegmente ergibt, und wobei die einzelnen LED-Lichtquellen getrennt ansteuerbar sind. Ein solcher Scheinwerfer ist beispielsweise aus der WO 2004/007241 A2 bekannt.

Ein gattungsgemäßer LED-Kraftfahrzeugscheinwerfer ist ferner aus US 2008/0198574 A1 bekannt.

Im Kraftfahrzeugbau werden immer häufiger Leuchtdioden zur Realisierung von Hauptscheinwerferfunktionen verwendet, wie z.B. zur Erzeugung von Abblendlicht und/oder Fernlicht aber auch von weiteren Lichtfunktionen, wie etwa Autobahnlicht, Schlechtwetterlicht und Tagfahrlicht.

Weiters eignen sich Scheinwerfer LED-Lichtquellen auch besonders gut für spezielle Anwendungen, etwa zur Objektbeleuchtung, wo nur bestimmte LED-Lichtquellen sichtbar sind bzw. Licht emittieren, während die restlichen LED-Lichtquellen kein Licht emittieren. Bei der Objektbeleuchtung werden beispielsweise Objekte am Straßenrand, etwa Fußgänger, aber auch Verkehrsschilder, mit Licht, z.B. mit Infrarotlicht, angestrahlt, und diese Objekte können dann mit einer Infrarotkamera aufgenommen werden. Natürlich kann auch sichtbares Licht, etwa für die Verkehrszeichenbeleuchtung verwendet werden.

Umgekehrt kann es natürlich auch möglich sein, aus einer Lichtverteilung, etwa einer Fernlichtverteilung bei Auftreten von Gegenverkehr genau jene Bereiche der Lichtverteilung, welche zu einer Blendung des Gegenverkehrs führen würden, auszublenden, sodass keine Blendung auftritt.

Obige Aufgaben können durch selektives Aktivieren bzw. im letzteren Fall durch selektives Deaktivieren bestimmter LED-Lichtquellen realisiert werden.

Zur Auswahl bestimmter LED-Lichtquellen gibt es derzeit elektronische Lösungen, bei welchen nur bestimmte LED-Lichtquellen aktiviert bzw. deaktiviert werden, sodass nur die gewünschten LED-Lichtquellen Licht auf die Strasse emittieren. Diese Lösung bietet eine hohe Flexibilität, da im Grunde beliebige LED-Lichtquellen aktiviert werden.

Andere Lösungen zeigen Blenden, welche zur Lichtabschattung bestimmter LED-Lichtquellen in eine entsprechende Position gebracht werden können.

Ausgehend von den oben angesprochenen elektronischen Lösungen ist es eine Aufgabe der Erfindung, einen Scheinwerfer anzugeben, mit dem eine dynamische Lichtverteilung erzeugt werden kann, welche an unterschiedliche Verkehrssituationen etc. im Fahrbetrieb angepasst wird.

Insbesondere ist es eine Aufgabe der Erfindung, einen solchen Scheinwerfer zu schaffen, der mit herkömmlich erhältlichen LED-Lichtquellen realisierbar ist.

Diese Aufgabe wird mit einem eingangs erwähnten Scheinwerfer durch die Merkmale des Kennzeichens des Anspruchs 1 gelöst.

Durch die Anordnung der LED-Lichtquellen in zwei oder mehr LED-Lichtquellen-Modulen kann eine homogene Lichtverteilung, z.B. eine Fernlichtverteilung, durch entsprechende horizontale Aneinanderreihung und/oder Überlagerung der einzelnen Lichtsegmente erzeugt werden, aus welcher Lichtverteilung durch Abschalten einzelner oder mehrerer LED-Lichtquellen ganz spezifische Bereiche der Lichtverteilung "ausgeblendet", d.h. nicht beleuchtet werden können, etwa um eine Blendung des Gegenverkehrs zu vermeiden.

Beispielsweise können die einzelnen Lichtsegmente in horizontaler Richtung unmittelbar aneinander angrenzend angeordnet sein. Damit es zu keinen allzu abrupten Übergängen kommt oder Kanten in der Lichtverteilung zu sehen sind, können zusätzlich noch ein oder mehrere andere Lichtsegmente in solchen Bereichen aneinanderstoßender Lichtsegmente überlagert werden. Diese hat auch den Vorteil, dass wie später noch eingehend erörtert, durch Ausblenden von z.B. zwei Lichtsegmenten Bereiche aus der Lichtverteilung "ausgeblendet" bzw. nicht beleuchtet werden können, die schmäler als ein Lichtsegment sind.

Grundsätzlich können also Lichtsegmente entsprechend der Erfindung in horizontaler Richtung nebeneinander direkt aneinander anschließend angeordnet sein, sie können sich in horizontaler Richtung überlappen, oder es wird vorzugsweise eine Kombination aus Aneinanderreihung und Überlappung gebildet.

Durch die Aufteilung der LED-Lichtquellen auf zwei oder mehr LED-Lichtquellen-Module können ohne besondere Adaptionen herkömmliche LED-Lichtquellen verwendet werden, wodurch sich der Scheinwerfer kostengünstig herstellen lässt.

Grundsätzlich sind relativ beliebige Formen für die Lichtaustrittsflächen der Primäroptikelemente verwendbar. Als günstig hat es sich herausgestellt, wenn die Lichtaustrittsflächen der Primäroptikelemente rechteckförmig ausgebildet sind. Entsprechende Primäroptiken sind einfach herzustellen und weisen hinsichtlich der Überlagerung der von den Primäroptiken über die Sekundäroptiken erzeugten Segmente der Lichtverteilung gute optische Eigenschaften auf. Mit solchen Lichtaustrittsflächen kann außerdem über die gesamte Höhe der Lichtverteilung in horizontaler Richtung eine durchgehende Lichtverteilung ohne Lücken im Lichtbild erzeugt werden.

Für die meisten Anwendungen ausreichend ist es, wenn alle Lichtaustrittsflächen eine idente Gestalt aufweisen. Dies hat den Vorteil einer einfach Berechnung und Herstellung des Scheinwerfers und reduziert die Kosten des Scheinwerfers deutlich.

Allerdings kann auch vorgesehen sein, dass Lichtaustrittsflächen unterschiedlicher Gestalt, z.B. mit unterschiedlichen Breiten (horizontale Ausdehnung) verwendet werden. Beispielsweise können gewisse Bereich der Lichtverteilung mit schmaleren Lichtaustrittsflächen erzeugt werden, wodurch sich dort eine feinere Segmentierung des Lichtbildes ergibt und kleinere bzw. schmälere Bereiche ausgeblendet werden können.

Prinzipiell wäre es ausreichend, wenn ein LED-Lichtquellen-Modul eine einzige LED-Lichtquelle mit einer einzigen Lichtaustrittsfläche aufweist. Allerdings ist dann in der Regel eine Vielzahl an solchen LED-Lichtquellen-Modulen notwendig, um eine gesetzeskonforme Lichtverteilung zu erreichen, und solche Anordnungen eignen sich eher für Spezialfälle.

Erfindungsgemäß weist jedes LED-Lichtquellen-Modul zwei oder mehr LED-Lichtquellen auf, wobei es dann weiters von Vorteil ist, wenn die Lichtaustrittsflächen aller LED-Lichtquellen parallel zueinander und mit identischer Ausrichtung angeordnet sind.

Durch die parallele und identische Ausrichtung kann auf einfache Weise auch in vertikaler Richtung und auf einfache Weise ein gesetzeskonformes Lichtbild erzeugt werden.

Bei einem konkreten Beispiel werden etwas pro LED-Lichtquellen-Modul drei Lichtquellen verwendet und es kommen vier Module in einer 2 x 2 Anordnung zum Einsatz, wodurch sich eine besonders kompakte Anordnung ergibt.

Erfindungsgemäß sind die Lichtaustrittsflächen der Primäroptikelemente eines LED-Lichtquellen-Moduls in horizontalem Abstand nebeneinander angeordnet sind.

Einerseits lässt sich eine solche Anordnung in der Praxis ohne besondere Schwierigkeiten realisieren, andererseits bilden so die Lichtaustrittsflächen über die Sekundäroptik scharf begrenzte Segmente im Lichtbild ab, deren Überlagerung dann das gesamte Lichtbild ergibt. Durch Abschalten von einer oder mehreren LED-Lichtquellen lassen sich bei einer solchen Anordnung definierte Bereiche im Lichtbild optimal ausblenden.

Erfindungsgemäß und im Sinne eines einfachen kostengünstigen Aufbaus des Scheinwerfers weisen die einzelnen LED-Lichtquellen-Module identische Sekundäroptikelemente auf.

Bei einer konkreten erprobten Ausführungsform der Erfindung sind bei drei oder mehr LED-Lichtquellen pro LED-Lichtquellen-Modul die Abstände zwischen Lichtaustrittsflächen benachbarter LED-Lichtquellen gleich und es sind alle Abstände zwischen den Lichtaustrittsflächen benachbarter LED-Lichtquellen über den gesamten Scheinwerfer identisch.

Dadurch ergibt sich wieder ein einfacher Aufbau mit identischen Modulen, mit dem eine homogene Lichtverteilung erzielt werden kann.

An dieser Stelle sei kurz erwähnt, dass unter "homogen" nicht verstanden wird, dass über den beleuchteten Bereich das Lichtbild überall gleich hell ist, sondern, dass im Lichtbild die Übergänge zwischen Bereichen unterschiedlicher Helligkeit stetig sind und keine scharfen Übergänge auftreten. Das Gesamtlichtbild sollte nicht "fleckig" sein sondern fließend Übergänge von helleren zu dunkleren Bereichen aufweisen.

Identische LED-Lichtquellen-Module mit identischen Sekundäroptikelementen erzeugen identische Lichtbilder, welche sich im Lichtbild (z.B. auf einer Wand in 25 Meter Entfernung) nahezu überlagern würden. Bei Lichtaustrittsflächen, die zueinander beabstandet sind, würde diese dazu führen, dass sich helle und dunkle Flecken im Lichtbild ergeben. Um ein homogenes Lichtbild zu erhalten, können Modifikationen an den Sekundäroptikelementen vorgenommen werden, damit es zu einer derartigen Überlagerung der Lichtbilder von den einzelnen LED-Lichtquellen-Modulen kommt, dass eine homogene Lichtverteilung ohne dunkle Flecken entsteht.

Als noch wesentlich einfach hat es sich herausgestellt, identische Sekundäroptikelemente zu verwenden, und die Anordnungen der LED-Lichtquellen-Module in Bezug auf das jeweils zugeordnete Sekundäroptikelement jeweils etwas anzupassen.

Die Anpassung erfolgt dabei dergestalt, dass die Gesamtanordnung der Lichtaustrittsflächen eines LED-Lichtquellen-Moduls in Bezug auf die optische Achse des Sekundäroptikelementes in horizontaler Richtung eine definierte Position einnimmt, und wobei die unterschiedlichen Gesamtanordnungen der einzelnen LED-Lichtquellen-Module voneinander unterschiedliche definierte Position in horizontaler Richtung in Bezug auf die optische Achse ihres jeweils zugeordneten Sekundäroptikelementes aufweisen.

Durch das Verschieben der jeweiligen Gesamtanordnungen der Lichtaustrittsflächen in Bezug zueinander und in Bezug auf die optischen Achsen des jeweils zugeordneten Sekundäroptikelementes werden auch die Lichtsegmente der einzelnen Module im Lichtbild leicht in horizontaler Richtung verschoben, sodass sich bei geeigneter Anordnung eine Überlagerung der Segmente zu einem homogenen Lichtbild ergibt.

Bei einer konkreten Form sind die Lichtaustrittsflächen in vertikaler Richtung stehend, mit größerer Höhe als Breite, ausgebildet, z.B. in Form von Rechtecken oder Ellipsen etc.

Durch diese stehende Form mit größerer Höhe und geringerer Breite wird mit einer Lichtaustrittsfläche ein schmaler Winkelbereich in horizontaler Richtung beleuchtet, in vertikaler Hinsicht kann der gesamte Bereich für diesen horizontalen Winkelbereich mit dieser einen Lichtaustrittsfläche beleuchtet werden.

Erfindungsgemäß weisen die benachbarte Lichtaustrittsflächen der LED-Lichtquellen eines LED-Lichtquellen-Moduls einen Normalabstand zueinander auf, welcher der Breite einer Lichtaustrittsfläche entspricht, und wenn eine erste Gesamtanordnung der Lichtaustrittsflächen eine erste definierte Position in Bezug auf die optische Achse ihrer Sekundäroptik einnimmt, und wobei eine zweite/dritte/vierte ... n-te Gesamtanordnung in Bezug auf die optische Achse ihrer Sekundäroptik im Vergleich zu der ersten Gesamtanordnung um den halben/einfachen/ 1,5 - fachen / ((n-1)/2)-fachen Normalabstand zwischen zwei benachbarten Lichtaustrittsflächen eines LED-Lichtquellen-Moduls verschoben ist.

Es ergibt sich dann eine Anordnung, bei welcher - abgesehen von den horizontalen Randbereichen - durch Ausblenden von 2 Lichtquellen des gesamten Scheinwerfers ein scharfer Bereich, welcher der halben Breite einer Lichtaustrittsfläche entspricht, ausgeblendet werden kann.

Ein erfindungsgemäßer Scheinwerfer erzeugt entweder den linken oder rechten Bereich einer Gesamtlichtverteilung, welche entsprechend mit zwei Scheinwerfern gebildet wird. Zur Erzeugung einer linken/rechten Seite einer Lichtverteilung (ausgehend von der vertikalen 0-Linie) sind die Lichtaustrittsflächen aller LED-Lichtquellen-Module des Scheinwerfers jeweils auf einer Seite einer Vertikalebene durch die optische Achse der ihnen jeweils zugeordneten Sekundäroptik angeordnet.

Damit sich im Zentrum der Lichtverteilung (0° horizontaler Winkel) eine Überlappung der linken und rechten Lichtverteilung ergibt, schneidet genau eine Lichtaustrittsfläche aller Lichtaustrittsflächen eines Scheinwerfers die optische Achse der ihr zugeordneten Sekundäroptik.

Um nicht nur in horizontaler Richtung sondern auch in vertikaler Richtung Lichtsegmente erzeugen zu können, kann weiters vorgesehen sein, dass jedes LED-Lichtquellen-Modul nicht nur aus einer sondern aus zumindest zwei horizontalen Zeilen von Lichtaustrittsflächen besteht, wobei jede Zeile zumindest eine Lichtaustrittsfläche von zumindest einer LED-Lichtquelle umfasst.

Damit kann beispielsweise eine kombinierte Abblendlicht-Fernlichtverteilung erzeugt werden und es können Teile bei Gegenverkehr ausgeblendet werden.

Um auch den Asymmetrieteil einer Abblendlichtverteilung optimal darstellen zu können, können drei horizontale Zeilen vorgesehen sein, wobei die obere und die untere Zeile in horizontaler Richtung zueinander verschoben sind, und wobei die Zeilen einen vertikalen Abstand zueinander aufweisen, derart dass Lichtaustrittsflächen der unteren Zeile unterhalb der freien Zwischenflächen zwischen den Lichtaustrittsflächen der oberen Zeile liegen, und wobei in der mittleren Zeile schräg verlaufende Lichtaustrittsflächen vorgesehen sind, die sich die jeweils von einen oberen Zwischenfläche zu einer in horizontaler Richtung unmittelbar folgenden unteren Zwischenfläche erstrecken.

Es können dann sowohl Fernlicht, Asymmetrieteil des Abblendlichtes als auch das Vorfeld des Abblendlichtes auf optimale Weise dargestellt werden, mit den Vorteilen des segmentierten Ausblendens wie oben beschrieben.

Um einen homogenen Übergang zwischen den einzelnen, oben angesprochenen Lichtverteilung (Fernlicht, Asymmetrie, Vorfeld) zu erhalten, ist es von Vorteil, wenn sich weiters die schrägen Lichtaustrittsflächen in die Zwischenflächen zwischen zwei Lichtaustrittsflächen hinein erstrecken.

Die einzelnen LED-Lichtquellen sind separat ansteuerbar, in erster Linie sind sie ein- und ausschaltbar, aber auch dimmbar. Eine LED-Lichtquelle kann über einen LED-Leuchtdiode verfügen, aber natürlich auch über mehrere. Diese können dann entweder gemeinsam angesteuert werden, oder es wird jede LED-Leuchtdiode separat angesteuert.

Die eingangs gestellte Aufgabe wird weiters auch noch mit einem Fahrzeugscheinwerfersystem mit zwei Scheinwerfern wie oben beschrieben gelöst, wobei der in einem in das Fahrzeug eingebauten Zustand linke Scheinwerfer auf der Fahrbahn den linken Teil der Lichtverteilung und der rechte Scheinwerfer den rechten Teil der Lichtverteilung erzeugt, und wobei zumindest jede LED-Lichtquelle der beiden Scheinwerfer separat ansteuerbar ist.

Im Folgenden ist die Erfindung an Hand der Zeichnung näher erläutert. In dieser zeigt

Fig. 1 einen relevanten Bestandteile eines erfindungsgemäßen LED-Scheinwerfer,

Fig. 2 ein LED-Lichtquellen-Modul für einen Scheinwerfer aus Figur 1,

Fig. 3 eine Anordnung von drei Primäroptiken eines LED-Lichtquellen-Moduls aus Figur 2,

Fig.4 eine schematische Darstellung einer Überlagerung von Lichtsegmenten, erzeugt mittels eines Scheinwerfers aus Figur 1, zu einer Lichtverteilung,

Fig. 5 eine Fernlichtverteilung erzeugt mit einem rechten und einem linken Scheinwerfer entsprechend der Erfindung,

Fig. 6 eine Detaildarstellung der mit einem Scheinwerfer aus Figur 1 erzeugten Lichtsegmente,

Fig. 7 eine schematische Darstellung eines ausgeblendeten Lichtbereiches in einer Fernlichtverteilung im Bereich des Gegenverkehrs,

Fig. 8 eine Darstellung der Fernlichtverteilung in Entsprechung zu der Situation aus Figur 7,

Fig. 9a - Fig. 9d unterschiedliche Fernlichtverteilungen mit ausgeblendeten Bereichen und eine entsprechende Darstellung der abgeschalteten LED-Lichtquellen,

Fig. 10 ein LED-Lichtquellenmodul für einen erfindungsgemäßen Scheinwerfer zur Erzeugung einer Fernlicht- und einer Abblendlichtverteilung in einer perspektivischen Ansicht von Vorne,

Fig. 11 das LED-Lichtquellenmodul aus Figur 10 in einer perspektivischen Ansicht von Hinten,

Fig.12 eine Lichtverteilung erzeugt mit einem Scheinwerfer mit LED-Lichtquellenmodulen nach Figur 10 bzw. 11,

Fig. 13 eine weitere, verbesserte Anordnung der Lichtaustrittsflächen von Primäroptikelementen für ein LED-Lichtquellenmodul nach Anspruch 10,

Fig.14 eine erste spezielle Ausgestaltung einer Primäroptik für ein LED-Lichtquellenmodul nach der Erfindung, und

Fig. 15 eine weitere spezielle Ausgestaltung einer solchen Primäroptik.

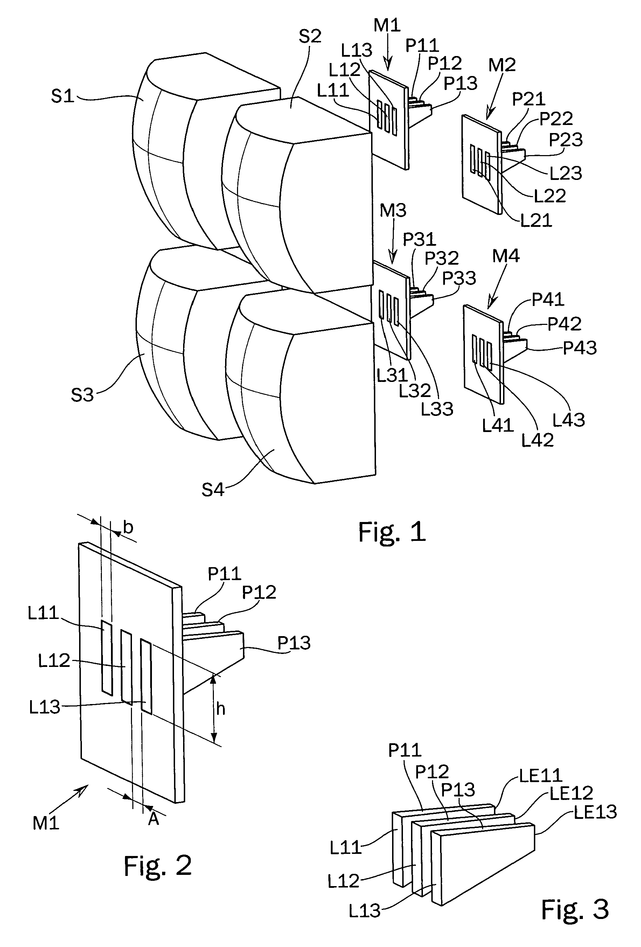

Figur 1 zeigt einen LED-Kraftfahrzeugscheinwerfer, z.B. einen rechten Fahrzeugscheinwerfer SWr zur Erzeugung einer dynamischen Lichtverteilung.

Der gezeigte Scheinwerfer weist vier LED-Lichtquellen-Module M1, M2, M3, M4 auf, welche in einer quadratischen 2 x 2 Anordnung positioniert sind. Jedes der LED-Lichtquellen-Module M1, M2, M3, M4 verfügt über jeweils drei LED-Lichtquelle, wobei jede Lichtquelle aus einer oder mehreren - in dieser Figur nicht dargestellten - Leuchtdioden besteht, welche Licht über Lichteinkoppelflächen LEU, LE12, LE13 (Figur 3) in Primäroptikelemente P11, P12, P13, P21, P22, P23, P31, P32, P33, P41, P42, P43 einkoppeln.

Das eingekoppelte Licht tritt - zumindest teilweise - aus den Lichtaustrittsfläche L11, L12, L13, L21, L22, L23, L31, L32, L33, L41, L42, L43 der jeweiligen Primäroptikelemente wieder aus und wird über ein Sekundäroptikelement S1, S2, S3, S4 - jedem LED-Lichtquellenmodul ist genau eine solches Sekundäroptikelement S1, S2, S3, S4 zugeordnet - in einen - im in ein Fahrzeug eingebauten Zustand des Scheinwerfers - vor dem Fahrzeug liegenden Bereich emittiert.

Die Lichtaustrittsflächen L11, L12, L13, L21, L22, L23, L31, L32, L33, L41, L42, L43 der Primäroptikelemente P11, P12, P13, P21, P22, P23, P31, P32, P33, P41, P42, P43 sind bei der gezeigten Variante rechteckförmig ausgebildet und weisen identische Form auf, mit einer Höhe h und einer Breite b der Lichtaustrittsflächen. Außerdem sind die LED-Lichtquellen bzw. zumindest die Lichtaustrittsflächen der Primäroptiken parallel zueinander und mit identischer Ausrichtung angeordnet. Weiters sind die Primäroptiken, d.h. die Lichtaustrittsflächen, in einem horizontalen Abstand A zueinander angeordnet, wobei alle benachbarten Lichtaustrittsflächen identische Abstände aufweisen.

Jede der Lichtaustrittsflächen der Primäroptiken erzeugt eine Lichtverteilung, die über die Sekundäroptikelemente (Linsen) als Segmente der Gesamt-Lichtverteilung auf die Straße projiziert werden. Durch die räumliche Trennung der Primäroptiken bzw. deren Lichtaustrittsflächen weisen die Segmente jeweils scharfe Kanten auf, was die Voraussetzung für einen blendfreien Betrieb darstellt.

Als Linsen/Sekundäroptikelemente werden beispielsweise Asphären verwendet, welche die Austrittsfläche der Primäroptik und somit deren Lichtverteilung scharf abbilden.

Durch entsprechende erfindungsgemäße Überlagerung dieser einzelnen Segmente - im gezeigten Fall von 12 Segmenten - ergibt sich die von einem Scheinwerfer erzeugte Lichtverteilung.

Dazu sind die Sekundäroptikelemente S1, S2, S3, S4 der LED-Lichtquellen-Module M1, M2, M3, M4 und die Anordnung der Lichtaustrittsflächen L11, L12, L13, L21, L22, L23, L31, L32, L33, L41, L42, L43 der Primäroptikelemente derart aufeinander abgestimmt, dass Licht aus den einzelnen LED-Lichtquellen-Modulen M1, M2, M3, M4 jeweils im Wesentlichen Bereiche beleuchtet, welche von den anderen LED-Lichtquellen-Modulen nicht oder nur wenig beleuchtet sind, sodass sich eine homogene Lichtverteilung ergibt.

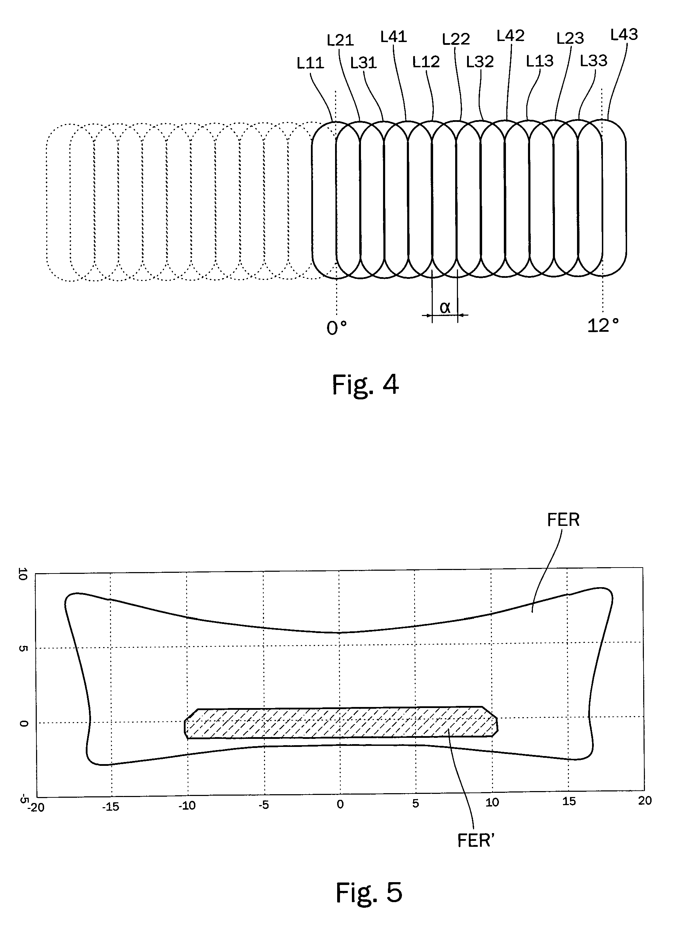

Eine entsprechende Lichtverteilung eines rechten Scheinwerfers ist schematisch in Figur 4 dargestellt, wobei die abgerundeten Bereiche der einzelnen Segmente nur zwecks besserer Unterscheidbarkeit so gezeichnet wurden.

Wie zu erkennen, erzeugen die einzelnen Lichtaustrittsflächen L11, L12, ..... vertikal stehende, scharfe Licht-Segmente (ebenfalls mit L11, L12, .... gekennzeichnet) definierter Breite. Das erste Modul M1 erzeugt drei Segmente L11, L12, L13, zwischen welchen dunkle Bereiche im Lichtbild liegen. Diese dunklen Bereiche, in welche kein oder nur wenig Licht aus dem ersten Modul gelangt, werden mit Licht aus dem dritten Modul M3 (Segmente L31, L32, L33) aufgefüllt. Licht aus dem zweiten Modul M2 wird verwendet, um die aneinander stoßenden Segmente aus Modul M1 und Modul M3 zu überlagern; ebenso wird das vierte Modul M4 einerseits zur Überlagerung verwendet, andererseits wird das Lichtbild nach rechts noch verbreitert.

Zusammenfassend kann festgehalten werden, dass sich das gesamte Lichtbild durch Überlagerung der einzelnen Segmente ein homogenes Lichtbild, d.h. ein Lichtbild ohne dunkle Stellen ergibt, wobei weiters die Überlagerung derart gewählt ist, dass durch Ausschalten von einem oder wenigen (2, 3) Segmenten sich schmale dunkle Bereiche im Lichtbild erzeugen lassen.

Figur 5 zeigt ein Gesamtlichtbild in Anlehnung an Figur 4, erzeugt mit einem linken und einem rechten Scheinwerfer. Zu erkennen ist eine Fernlichtverteilung FER mit einem typischen Maximum FER' an der HV-Linie bzw. im Bereich der HH-Linie. Dazu sind die Primäroptiken derart ausgelegt, das ein Maximum in der Lichtverteilung in vertikaler Richtung in diesem Bereich erhalten wird, mit nach oben und unten abfallender Intensität der Lichtverteilung (nach oben hin auslaufend, nach unten hin an die Abblendlichtverteilung angepasst). In horizontaler Richtung sind die Primäroptiken auf eine möglichst homogene Lichtverteilung mit wenig Abfall der Lichtintensität nach links/rechts ausgelegt, im bei Überlagerung der Segmente keine hohen Intensitätsgradienten in der Lichtverteilung zu erhalten.

Die Primäroptiken können z.B. als TIR-("Total Internal Reflection")-Optiken (z.B. Glas) oder als offene Kollimatoren realisiert werden.

Die Verwendung von Primäroptiken ermöglicht größere Abstände der LED-Lichtquellen. Dadurch können Standard-LEDs eingesetzt werden und es müssen keine speziellen LED-Arrays oder LED-Matrizen verwendet werden, die in der Anschaffung/Herstellung sehr teuer sind und zu welchen es auch keine Standards gibt. Ein typischer Abstand LED - LED in horizontaler Richtung liegt z.B. bei 4 mm - 6 mm.

Die einzelnen LED-Lichtquellen-Module M1, M2, M3, M4 weisen vorzugsweise identische Sekundäroptikelemente S1, S2, S3, S4 auf.

Identische LED-Lichtquellen-Module mit identischen Sekundäroptikelementen erzeugen identische Lichtbilder, welche sich im Lichtbild (z.B. auf einer Wand in 25 Meter Entfernung) nahezu überlagern würden. Bei Lichtaustrittsflächen, die zueinander beabstandet sind, würde diese dazu führen, dass sich helle und dunkle Flecken im Lichtbild ergeben. Um ein homogenes Lichtbild zu erhalten, können Modifikationen an den Sekundäroptikelementen vorgenommen werden, damit es zu einer derartigen Überlagerung der Lichtbilder von den einzelnen LED-Lichtquellen-Modulen kommt, dass eine homogene Lichtverteilung ohne dunkle Flecken entsteht.

Als noch wesentlich einfacher hat es sich herausgestellt, wenn wie oben angesprochen identische Sekundäroptikelemente verwendet werden, und die Anordnungen der LED-Lichtquellen-Module bzw. die Anordnung der Lichtaustrittsflächen der Primäroptikelemente in Bezug auf das jeweils zugeordneten Sekundäroptikelement jeweils angepasst werden.

Jedes der Module M1, M2, M3, M4 verfügt über eine Gesamtanordnung G1, G2, G3, G4 an Lichtaustrittsflächen L11, L12, L13, L21, L22, L23, L31, L32, L33, L41, L42, L43, die Positionen der Lichtaustrittsflächen einer Gesamtanordnung sind zueinander fix.

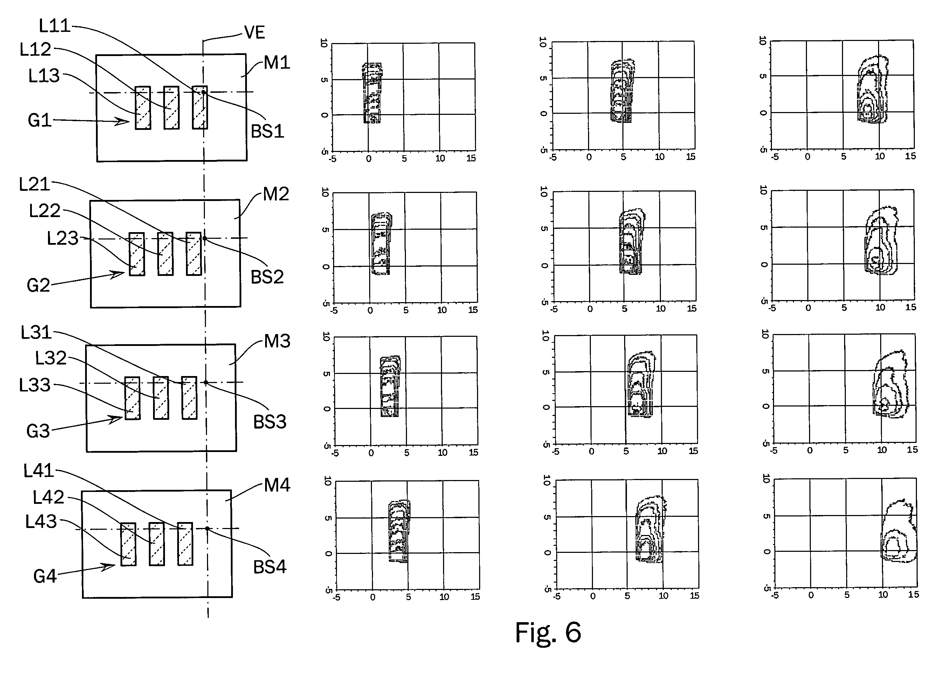

Figur 6 zeigt nun eine solche Anordnung von 4 Modulen (der Einfachheit halber untereinander dargestellt), die Blickrichtung auf das Zeichnungsblatt entspricht dem Blick in Lichtaustrittsrichtung, es wird also von hinten auf die Module geblickt.

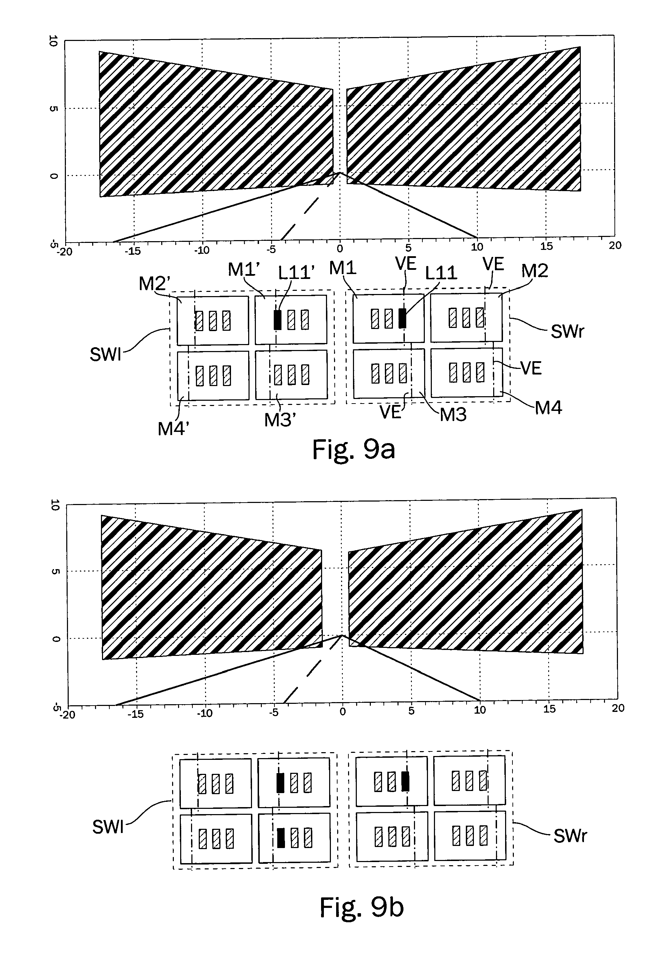

Weiters eingezeichnet ist eine Vertikalebene VE, in welcher Ebene VE die optischen Achsen (diese stehen in der Figur senkrecht auf die Zeichnungsebene) der Sekundäroptiken S1, S2, S3, S4 (siehe auch Fig. 9a) der Sekundäroptiken liegen. BS1, BS2, BS3, BS4 bezeichnen die jeweiligen Brennpunkte der Sekundäroptiken. In Bezug auf diese Vertikalebene VE weisen die unterschiedlichen Gesamtanordnungen G1, G2, G3, G4 jeweils eine zueinander verschobene Position auf, wodurch sich die Überlagerung der Segmente im Gesamtlichtbild ergibt. Die Anordnung G1 des ersten Moduls M1 ist z.B. derart gewählt, dass die rechte Lichtaustrittsfläche L11 die Ebene VE leicht schneidet, als Lichtsegment wird das ganz links in der ersten Zeile dargestellte Segment abgebildet. Die weiteren Lichtaustrittsflächen L12, L13 bilden das mittlere und rechte Segment ab.

Die zweite Anordnung G2 ist in Bezug auf die erste Anordnung G1 um den halben Normalabstand A zwischen zwei Lichtaustrittsflächen nach links verschoben, die Anordnung G3 ist in Bezug auf die zweite ebenfalls um den halben Normalabstand verschoben, usw.

Entsprechend ergeben sich einzelne, leicht zueinander verschobene Lichtsegmente, die sich im Gesamtlichtbild wie in Figur 4 dargestellt überlagern.

Es ergibt sich dann eine Anordnung, bei welcher - abgesehen von den horizontalen Randbereichen - durch Ausblenden von einer oder mehreren Lichtquellen des gesamten Scheinwerfers ein scharfer Bereich, welcher der halben Breite einer Lichtaustrittsfläche entspricht, ausgeblendet werden kann.

Dazu ist es notwendig, dass die einzelnen LED-Lichtquellen separat ansteuerbar und zumindest ein- und ausschaltbar sind.

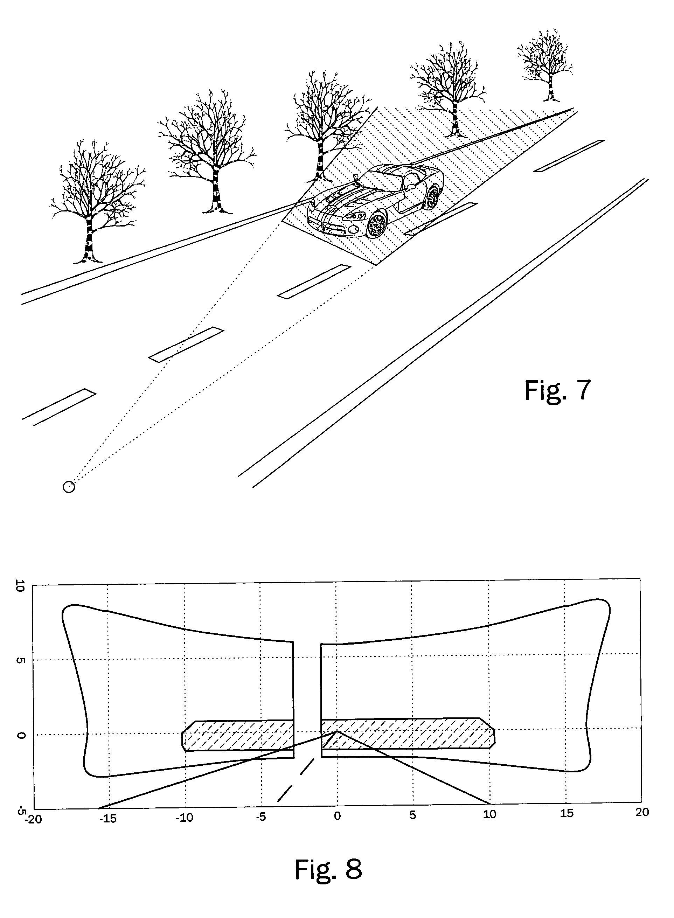

In Figur 7 ist beispielhaft eine solche Situation dargestellt, wobei schematisch der strichlierte Bereich in der Lichtverteilung, in welchem sich ein Fahrzeug des Gegenverkehrs befindet, ausgeblendet ist.

Eine entsprechende Fernlichtverteilung ist in Figur 8 dargestellt. Es handelt sich hierbei um die Fernlichtverteilung aus Figur 5, mit einem ausgeblendeten vertikalen Streifen.

Die Figuren 9a - 9d zeigen noch einmal im Detail einen linken und einen rechten Scheinwerfer SW1 (mit den Modulen M1' - M4'), SWr (mit den Modulen M1 - M4) und die damit erzeugte Lichtverteilung. Um einen vertikalen Streifen wie in Fig. 9a dargestellt auszublenden, um eine Blendung eines vor dem Fahrzeug fahrenden anderen Fahrzeuges zu vermeiden, werden bei jeweils jenem Modul M1, M1' der beiden Scheinwerfer SWr, SW1, bei welchem eine Lichtaustrittsfläche L11, L11' durch die Vertikalebene VE schneidet, welche die optische Achse der zugehörigen Sekundäroptik enthält, genau diese beiden Lichtaustrittsflächen L11, L11' bzw. die zugehörigen LED-Lichtquellen abgeschaltet. Die nicht leuchtenden Lichtaustrittsflächen sind schwarz dargestellt.

Figur 9b zeigt eine Situation mit weit entferntem Gegenverkehr sowie einem Fahrzeug auf der eigenen Verkehrsseite und die entsprechend abgeschalteten Lichtquellen.

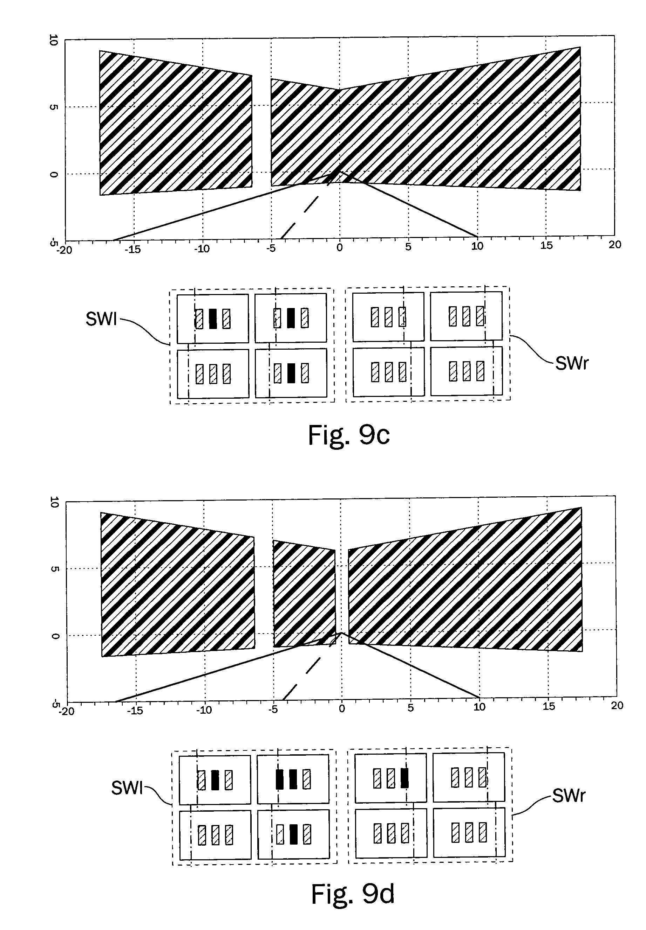

Figur 9c zeigt die Situation von Gegenverkehr in der Nähe des eigenen Fahrzeuges und Figur 9d ein Fahrzeug auf der eigenen Seite, in größerer Entfernung sowie Gegenverkehr oder einen Fußgänger nahe dem eigenen Fahrzeug.

Wichtig ist, dass einzelnen Segmente "dynamisch" ausgeblendet und wieder eingeblendet werden können, d.h. z.B. bei sich näherndem Gegenverkehr wandert der entsprechende lichtfreie Streifen entsprechend dem sich nähernden Gegenverkehr immer mehr zum eigenen Fahrzeug heran.

Ein Scheinwerfer wie in Figur 1 gezeigt weist eine Reihe von Vorteilen auf: kompakte Bauweise durch 2 x 2 Anordnung der Module, identische Module und identische Sekundäroptiken, einfache Herstellung durch einfache Form der Lichtaustrittsflächen, ...... Ein weiterer, grundsätzlicher Vorteil der Erfindung, nicht nur in der Version nach Figur 1, liegt auch darin, dass durch Ausblenden von nur sehr wenigen Segmenten der Lichtverteilung die gewünschten Ziele erreicht werden können. Die vorgestellte 2 x 2-Anordnung ist kompakt in der Anordnung, allerdings nur ein vorteilhaftes Beispiel, es sind auch z.B. 4 x 1-Anordungen (in vertikale Reihe) oder 1 x 4-Anordnungen (in horizontale Reihe), kreisförmige Anordnungen etc. möglich, auch andere Anzahlen an verwendeten Modulen.

Grundsätzlich können, wie erwähnt auch mehr als 4 Module verwendet werden, eine Anordnung im Quadrat ist nicht unbedingt notwendig, und auch die identische Form der Lichtaustrittsflächen, identische Abstände etc. sind nicht unbedingt notwendig, auch die rechteckig Form der Lichtaustrittsflächen ist zwar vorteilhaft aber nicht zwingend notwendig.

Es könnte z.B. auch vorgesehen sein, dass mit horizontal nach außen wandernden Segmenten diese breiter werden, d.h. die Segmentierung des Lichtbildes nach außen hin grober wird, entsprechend nehmen auch die Abstände A zwischen den Lichtaustrittsflächen und deren Breite zu (die Breite kann linear aber auch z.B. exponentiell zunehmen). Vorzugsweise entspricht der Abstand der zwischen benachbarten Lichtaustrittsflächen der Breite der Lichtaustrittsfläche eines Primäroptikelements, und zwar derart, dass im Lichtbild vorhandene Lücken durch die anderen Segmente aufgefüllt werden. Lücken werden von (einer) anderen versetzten Lichtaustrittsfläche aufgefüllt und überlappen sich vorzugsweise, damit das gesamte Lichtbild homogen wird. Die Überlappung kann aber auch geringer als die halbe Breite einer Lichtaustrittsfläche sein, z.B. ein Drittel, die Lichtverteilung wird dann aber weniger homogen.

Wie schon beschrieben, werden mehreren Modulen zu einer vollständigen Lichtverteilung überlagert. Jedes Modul erzeugt mehrere Segmente in einem gewissen Abstand. Breite und Abstand der Segmente können je nach Überlagerungsart leicht variiert werden. Die Segmentgruppen werden jeweils um einen Bruchteil, vorzugsweise der Hälfte der Segmentbreite zueinander versetzt.

Die Anzahl der nötigen Module für eine voll ausgeleuchtete Lichtverteilung ergibt sich aus dem Abstand der einzelnen Segmente. Ein typischer Wert, der sich ergibt, sind 4 Module.

$$\text{Anzahl der Module} = (\text{Segmentbreite [°]} + \text{Segmentabstand [°]}) / \text{Schrittweite [°]}$$

Daraus ergibt sich die Zahl der Lichtverteilungen, die in jedem Bereich überlagert werden und zur Beleuchtung beitragen. Dies ist natürlich auch die Anzahl der Segmente, die ausgeblendet werden muss, um ein Segment vollständig abzudunkeln:

Überlagerung in jedem Segment = Segmentbreite / Schrittweite

**Tabelle 1: Mögliche Ausführungsvarianten**

| Variante | Segmentbreite | Abstand | Schrittweite | Modulanzahl | Modulanzahl | Überlagerte Verteilungen in jedem Segment |
|---|---|---|---|---|---|---|
| 1 | 2° | 2° | 1° | | 4 | 2 |
| 2 | 2° | 2° | 2° | | 2 | 1 |
| 3 | 3° | 1° | 1° | | 4 | 3 |
| 4 | 3° | 2° | 1° | | 5 | 3 |

Aufgrund der versetzten Überlagerung müssen im blendfreien Betrieb jeweils mehrere Segmente abgeschaltet werden, um einen Bereich vollständig abzudunkeln. Dadurch entstehen am Übergang zwischen voll beleuchteten und ausgeblendeten Segmenten Bereiche, die nur zum Teil beleuchtet werden (Halbschatten). Je nach Ausführungsvariante ist dieser Halbschatten unterschiedlich breit.

**Tabelle 2: Halbschatten für Variante 2**

| 1° | 1° | 1° | 1° | 1° | 1° | 1° |
|---|---|---|---|---|---|---|
| 100 % | 100% | 50 % | 0 % | 50 % | 100 % | 100 % |

**Halbschatten für Variante 3:**

| 1° | 1° | 1° | 1° | 1° | 1° | 1° |
|---|---|---|---|---|---|---|
| 100 % | 66% | 33% | 0% | 33% | 66 % | 100 % |

Die Module im rechten Scheinwerfer erzeugen die rechte Hälfte der Lichtverteilung und die Module im linken Scheinwerfer die linke Hälfte der Lichtverteilung, wobei die beiden Hälften der Lichtverteilung symmetrisch sind. Je nach Ausführungsvariante kann die Gesamtbreite der Lichtverteilung gesteuert werden. Nach innen muss die Lichtverteilung einen Winkelbereich bis 1,5° - 2,5° abdecken, um im Zentrum der Lichtverteilung eine ausreichende Überlagerung zu erzielen. Durch den Abstand der Scheinwerfer würde sich ansonsten in der Wandprojektion ein vertikaler Spalt im Lichtbild ergeben.

Um horizontal einen gleichmäßigen Abfall der Lichtintensität zu realisieren, können die LED-Lichtquellen von innen nach außen elektronisch gedimmt werden. Dadurch kann sowohl der Gesamtlichtstrom als auch die Breite des Intensitätsmaximums und der Gradient des Abfalls eingestellt werden. Die Dimmung erfolgt ausgehend von 100% Lichtstrom im Zentrum in gleichmäßigen Schritten zur Seite hin, bis auf einen Lichtstrom von 10% - 20% im äußersten Segment.

**Tabelle 3: Beispiele**

| (Lichtstrom in % des Maximallichtstroms) | | | | | | | | | |
|---|---|---|---|---|---|---|---|---|---|
| | Segment | | | | | | | | |
| Variante | 1 | 2 | 3 | 4 | ... | 9 | 10 | 11 | 12 |
| 1 | 100 | 95 | 90 | 85 | ... | 60 | 55 | 50 | 45 |
| 2 | 100 | 92,5 | 85 | 77,5 | ... | 40 | 32,5 | 25 | 17,5 |
| 3 | 100 | 90 | 80 | 70 | ... | 20 | 10 | 10 | 10 |

Aus dem Aufbau der Module ergibt sich, dass die Leistung durch die verwendete Dimmung gleichmäßig auf die einzelnen Module verteilt ist. Jedes Modul enthält jeweils ein Segment, das mit hoher, mittlerer und niedriger Leistung betrieben wird.

Mit dem oben beschriebenen Scheinwerfer kann z.B. eine dynamische Fernlichtverteilung erzeugt werden, aus welcher vertikale Segmente je nach Bedarf ausgeblendet werden.

Um nicht nur in horizontaler Richtung sondern auch in vertikaler Richtung Lichtsegmente erzeugen zu können, kann weiters vorgesehen sein, dass jedes LED-Lichtquellen-Modul (M) nicht nur aus einer sondern aus zumindest zwei horizontalen Zeilen von Lichtaustrittsflächen L1, L2, L3, L4, L5, L6, L7, L8, L9 besteht, wobei jede Zeile zumindest eine Lichtaustrittsfläche L1, L2, L3; L4, L5, L6; L7, L8, L9 von zumindest einer LED-Lichtquelle umfasst. Damit kann beispielsweise eine kombinierte Abblendlicht-Fernlichtverteilung erzeugt werden und es können Teile bei Gegenverkehr ausgeblendet werden.

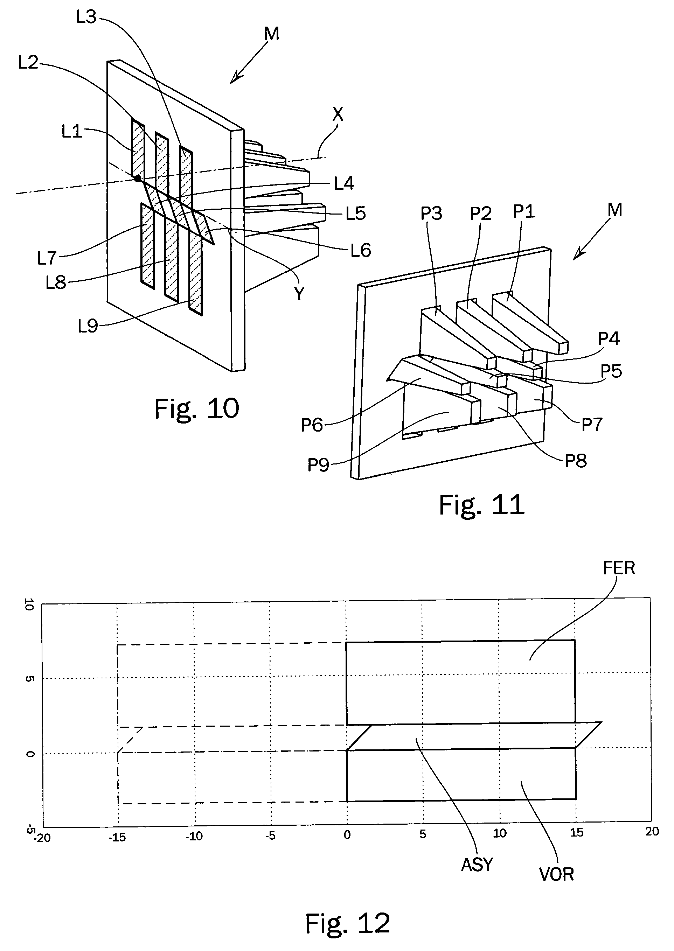

Figur 10 und 11 zeigen ein Beispiel für ein solches Lichtmodul M für den Einsatz in einem erfindungsgemäßen Scheinwerfer. Das beispielhaft gezeigte Modul M weist drei Zeilen mit je drei Lichtaustrittsflächen L1 - L9 von Primäroptiken P1 - P9 auf. Die Primäroptiken P1 - P9 bilden mit den zugeordneten nicht dargestellten Leuchtdioden die jeweiligen LED-Lichtquellen.

Mit den drei horizontalen Zeilen kann nun auch ein Asymmetrieteil einer Abblendlichtverteilung optimal dargestellt werden. Die obere und die untere Zeile weisen einen vertikalen Abstand zueinander auf und sind in horizontaler Richtung zueinander verschoben, dass die Lichtaustrittsflächen L7, L8, L9 der unteren Zeile unterhalb der freien Zwischenflächen zwischen den Lichtaustrittsflächen L1, L2, L3 der oberen Zeile liegen. In der mittleren Zeile verlaufen die Lichtaustrittsflächen L4, L5, L6 schräg (für den Asymmetrieteil), wobei sie sich jeweils von einer oberen Zwischenfläche zu einer in horizontaler Richtung unmittelbar folgenden unteren Zwischenfläche erstrecken.

Eine Lichtverteilung eines rechten Scheinwerfers unter Verwendung von Modulen wie in Figur 10 und 11 dargestellt ist in Figur 12 skizziert, mit dem Fernlichtanteil FER, einem Asymmetrieanteil ASY und dem Vorfeldanteil VOR der Lichtverteilung.

Es können also sowohl Fernlicht, Asymmetrieteil des Abblendlichtes als auch das Vorfeld des Abblendlichtes auf optimale Weise dargestellt werden, mit den Vorteilen des segmentierten Ausblendens oder Einblendens wie oben beschrieben.

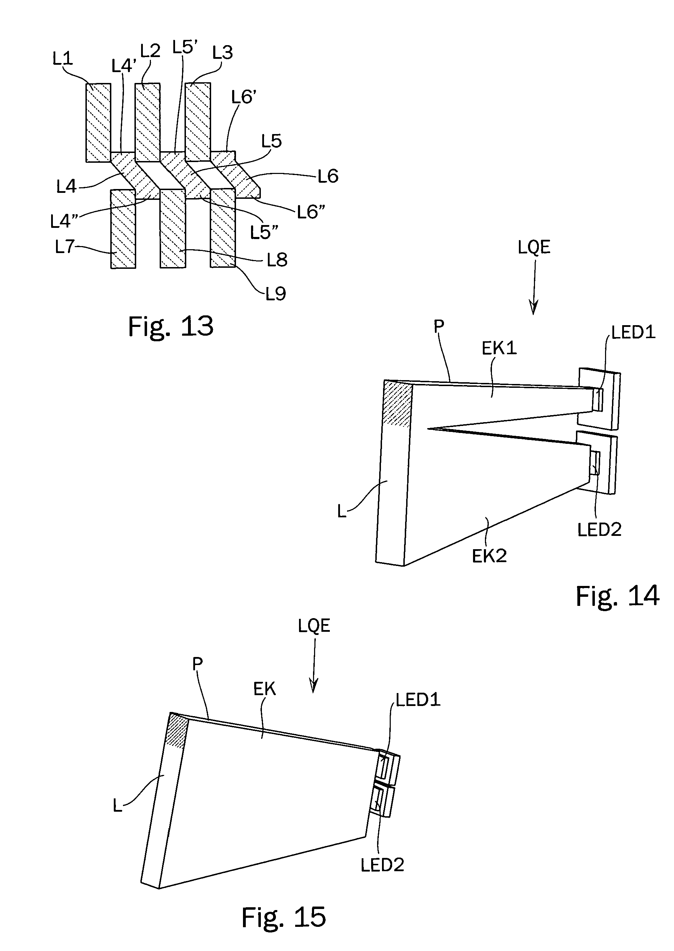

Um einen homogenen Übergang zwischen den einzelnen, oben angesprochenen Lichtverteilung (Fernlicht, Asymmetrie, Vorfeld) zu erhalten, ist es von Vorteil, wenn sich weiters die schrägen Lichtaustrittsflächen L4, L5, L6 in die Zwischenflächen zwischen zwei Lichtaustrittsflächen L1, L2, L3; L7, L8, L9 mit Bereichen L4', L4", L5', L5", L6', L6" hinein erstrecken und vorzugsweise beiderseits an die Lichtaustrittsflächen der oberen und unteren Zeilen angrenzen, wie dies in Fig. 13 dargestellt ist.

Allgemein gilt, dass wie oben schon angesprochen die einzelnen LED-Lichtquellen separat ansteuerbar sind, in erster Linie sind sie ein- und ausschaltbar, aber auch dimmbar. Eine LED-Lichtquelle kann über einen LED-Leuchtdiode verfügen, aber natürlich auch über mehrere. Diese können dann entweder gemeinsam angesteuert werden, oder es wird jede LED-Leuchtdiode separat angesteuert.

In Figur 14 ist ein Beispiel für eine LED-Lichtquelle LEQ umfassend eine spezielle Primäroptik P und zwei Leuchtdioden LED1, LED2 dargestellt, in welche Primäroptik P die beiden Leuchtdioden ihr Licht einkoppeln. Durch die Aufteilung der Primäroptik P in zwei getrennte Einkoppelkörper EK1, EK2, die in eine gemeinsame Lichtaustrittsfläche L zusammen laufen, können die Leuchtdioden LED1, LED2 mit größerem Abstand zueinander angeordnet werden. Die Primäroptik P ist derart ausgelegt, dass mehr Licht in den schraffierten Bereich gelangt, welcher in den Bereich um die horizontale 0-Linie abgebildet wird.

Mit einer Primäroptik P nach Figur 15 mit einem einzigen Einkoppelkörper EK müssen die Leuchtdioden LED1, LED2 näher zusammen angeordnet werden, um die selben Effekte wie mit der Primäroptik aus Figur 14 zu erreichen, die Primäroptik ist dafür einfacher zu gestalten.

Bei den in Figur 14 und 15 gezeigten LED-Lichtquellen LQE koppeln zwei horizontal übereinander angeordnete Leuchtdioden LED1, LED2 Licht in die Primäroptik ein, es könnten aber auch mehrere übereinander angeordnete Leuchtdioden sein. Die LED-Lichtquellen LED1, LED2 sind bei einer vorteilhaften Variante nun unabhängig voneinander ansteuerbar. Weiters ist die Anordnung so gewählt ist, dass die beiden Leuchtdioden LED1, LED2 über die Lichtaustrittsfläche des Primäroptikelementes P jeweils als horizontales Lichtsegment abgebildet wird, wobei diese horizontalen Lichtsegmente dergestalt sind, dass sich die gewünschte Lichtverteilung über die Höhe des von dieser LED-Lichtquelle erzeugten vertikalen Lichtsegmentes ergibt. Durch Abschalten einer Lichtquelle LED1, LED2 kann dann das Lichtbild auch in vertikaler Richtung, also in der Höhe segmentiert werden, etwa kann durch Abschalten der unteren Leuchtdiode LED2 der Fernlichtanteil der Lichtverteilung weggeschaltet werden.

Mit einer solchen LED-Lichtquelle kann auf eine zwei- oder mehrzeilige Anordnung von Lichtaustrittsflächen wie z.B. in Figur 10 dargestellt verzichtet werden.

Dies sind spezielle vorteilhafte Ausgestaltungen, grundsätzlich reicht auch nur eine einfache Primäroptik wie in Figur 15 mit einer einzigen Leuchtdiode aus.

Mit Modulen wie in Figur 10/11 bzw. 13 dargestellt lässt sich beispielhaft weiters auch realisieren:

*) ein Kurvenlicht durch dynamisches Zuschalten der LEDs L4 - L6 der jeweiligen Module) auf der linken oder rechten Verkehrsseite;

*) ein Rechts- und Linksverkehrscheinwerfer;

*) eine Dynamische Vorfeldbeleuchtung, z.B. für Stadtlicht (große Breite), Autobahnlicht mit weniger Breite, Landstraßenlicht mit mittlerer Breite, Schlechtwetterlicht durch Ausblenden des mittleren Vorfeldes ...

Außerdem ist mit den erfindungsgemäßen Scheinwerfern, insbesondere nach Fig. 10/11/13 auch eine Objektbeleuchtung realisierbar. Eine Objektbeleuchtung erfolgte bisher mit Schwenkmodulen oder mehreren Lichtquellen, die verschiedene Segmente beleuchtet haben, allerdings ohne den Anspruch, scharfe Ränder zu realisieren.

Allgemein gilt, dass die Segmente im Winkelraum eine bestimmte Breite aufweisen (typischerweise 2°). Die Dimensionen der Primäroptik sind vom Abbildungsmaßstab der Linse abhängig. Eine Ausführungsvariante ist: Breite der Austrittsfläche 2 mm, Linse: Schnittweite 40 mm, Durchmesser 80 mm → Abbildung im Winkelraum ~2° Breite.

Das seitliche Verschieben der Segmente in der Lichtverteilung erfolgt durch Versetzen der Primäroptiken samt Leuchtdioden relativ zur optischen Achse der Linse (Sekundäroptik) im jeweiligen Modul, im konkreten Fall von 2° Segmentbreite um 1°. Beim Abschalten verschiedener LEDs können beliebige Bereiche der Lichtverteilung bis zu einer Breite von mindestens 1° (Winkel α in Figur 4) zur Gänze abgedunkelt werden. Dieser ausgeblendete Bereich kann in 1° Schritten bewegt werden.

Prinzipiell wären auch schmälere Ausblendungsbereiche technisch machbar. Man müsste dazu die Lichtaustrittsbreite der Primäroptiken reduzieren (z.B. > 2 mm). Solch ein System würde aber lichttechnisch immer ineffizienter werden, da sich die Lichtverluste in den Primäroptiken rasant vergrößern.

Um die maximale Schärfe der Abbildung im Bereich von H-V zu realisieren, sind die optischen Achsen aller Linsen in Fahrtrichtung ausgerichtet. Da alle Module gleich aufgebaut sind, ist der Einfluss der Abbildungsfehler (Verzerrungen) für alle Module gleich und die Segmente ergeben in der Überlagerung eine homogene Lichtverteilung. Zu größeren Winkeln hin werden die Segmente unschärfer und dadurch auch breiter abgebildet. In diesen Bereichen sind auszublendende Objekte schon sehr nahe, wodurch ohnehin mehrere Segmente ausgeblendet werden müssen. Die Innenkante der Segmente wird jedoch auch weiter außen noch scharf abgebildet.

Im blendfreien Betrieb werden immer ein bzw. mehrere Segmente abgeschaltet. Der ausgeblendete Bereich kann in 1° Schritten an das Objekt angepasst werden. Der ausgeblendete Bereich wird immer auf ein notwendiges Minimum reduziert und hat daher eine hohe Dynamik. Ein Bereich von konstanter Breite wird nur verschoben. Die innere Kante des ausgeblendeten Bereichs wird nur langsam variiert. Dadurch wird das Lichtbild ebenfalls ruhiger.

Ein großer Vorteil des Systems ist, dass auch im blendfreien Betrieb immer alle Segmente hell erscheinen. Da nebeneinander liegende Segmente auf mehrere Module verteilt sind, wird selbst beim Ausblenden mehrerer Segmente kein Modul vollständig dunkel.

Um von jeder Primäroptik den gleichen Lichtstrom abzubilden werden die Linsen symmetrisch bezüglich des Primäroptikbauteils (LED-Lichtquellen-Moduls) und dadurch asymmetrisch bezüglich der optischen Achse der Linse beschnitten. Die Linsen haben allerdings identische optische Eigenschaften.

Als Lichtquellen können Standard-LEDs verwendet werden, die in SMT Bauweise angeordnet werden. Es sind keine spezifischen LED Arrays bzw. LED Matrizen notwendig.

Die Lichtverteilung wird durch mehrere identisch aufgebaute Module erzeugt. So kann ein Gleichteile Konzept mit identischen LEDs und identischen Primäroptiken realisiert werden und die Komplexität des Gesamtsystems trotz hoher Funktionalität niedrig gehalten werden.

Mit der Erfindung wird das Ziel erreicht, AFS-Funktionen, im speziellen blendfreies Fernlicht, nur durch elektronische Ansteuerung und ohne bewegliche Teile und Motoren zu realisieren.

**Patentansprüche**

1. LED-Kraftfahrzeugscheinwerfer (SW1, SWr) zur Erzeugung einer dynamischen Lichtverteilung, mit einer Anzahl von LED-Lichtquellen, wobei eine LED-Lichtquelle jeweils aus zumindest einer Leuchtdiode (LED1, LED2) und einem Primäroptikelement (P; P11, P12, P13, P21, P22, P23, P31, P32, P33, P41, P42, P43; P1, P2, P3, P4, P5, P6 P7, P8, P9) besteht, in welches Primäroptikelement (P; P11, P12, P13, P21, P22, P23, P31, P32, P33, P41, P42, P43; P1, P2, P3, P4, P5, P6 P7, P8, P9) die zumindest eine Leuchtdiode (LED1, LED2) Licht einkoppelt, und wobei das eingekoppelte Licht zumindest teilweise aus einer Lichtaustrittsfläche (L; L11, L12, L13, L21, L22, L23, L31, L32, L33, L41, L42, L43; L1, L2, L3, L4, L5, L6, L7, L8, L9) des Primäroptikelementes wieder austritt, wobei die LED-Lichtquellen in zumindest zwei LED-Lichtquellen-Modulen (M; M1, M2, M3, M4) angeordnet sind, wobei jedes LED-Lichtquellen-Modul (M; M1, M2, M3, M4) zwei oder mehr LED-Lichtquellen umfasst, wobei jedes LED-Lichtquellen-Modul (M; M1, M2, M3, M4) eine Sekundäroptik (S1, S2, S3, S4) aufweist, welche die von den Lichtaustrittsflächen (L; L11, L12, L13, L21, L22, L23, L31, L32, L33, L41, L42, L43; L1, L2, L3, L4, L5, L6, L7, L8, L9) der Primäroptikelemente (P; P11, P12, P13, P21, P22, P23, P31, P32, P33, P41, P42, P43; P1, P2, P3, P4, P5, P6 P7, P8, P9) erzeugten Lichtsegmente - im in ein Fahrzeug eingebauten Zustand des Scheinwerfers - in einen vor dem Fahrzeug liegenden Bereich abbildet, wobei die Sekundäroptikelemente (S1, S2, S3, S4) der LED-Lichtquellen-Module (M; M1, M2, M3, M4) und die Anordnung der Lichtaustrittsflächen (L; L11, L12, L13, L21, L22, L23, L31, L32, L33, L41, L42, L43; L1, L2, L3, L4, L5, L6, L7, L8, L9) der Primäroptikelemente derart aufeinander abgestimmt sind, dass die Lichtsegmente aus den einzelnen LED-Lichtquellen-Modulen (M; M1, M2, M3, M4) in horizontaler Richtung zueinander versetzt abgebildet sind, und zwar derart, dass sich eine Lichtverteilung durch entsprechende horizontale Überlagerung der einzelnen Lichtsegmente oder durch eine Aneinanderreihung und Überlagerung der einzelnen Lichtsegmente ergibt, und wobei die einzelnen LED-Lichtquellen getrennt ansteuerbar sind, **dadurch gekennzeichnet, dass** benachbarte Lichtaustrittsflächen (L; L11, L12, L13, L21, L22, L23, L31, L32, L33, L41, L42, L43; L1, L2, L3, L4, L5, L6, L7, L8, L9) der Primäroptikelemente (P; P11, P12, P13, P21, P22, P23, P31, P32, P33, P41, P42, P43; P1, P2, P3, P4, P5, P6 P7, P8, P9) eines LED-Lichtquellen-Moduls (M; M1, M2, M3, M4) in horizontalem Abstand (A) nebeneinander angeordnet sind, und wobei die einzelnen LED-Lichtquellen-Module (M; M1, M2, M3, M4) identische Sekundäroptikelemente (S1, S2, S3, S4) aufweisen, wobei die Gesamtanordnung (G1, G2, G3, G4) der Lichtaustrittsflächen (L; L11, L12, L13, L21, L22, L23, L31, L32, L33, L41, L42, L43; L1, L2, L3, L4, L5, L6, L7, L8, L9) eines LED-Lichtquellen-Moduls (M; M1, M2, M3, M4) in Bezug auf die optische Achse (X) des Sekundäroptikelementes (S1, S2, S3, S4) in horizontaler Richtung eine definierte Position einnimmt, und wobei die unterschiedlichen Gesamtanordnungen der einzelnen LED-Lichtquellen-Module (M; M1, M2, M3, M4) voneinander unterschiedliche definierte Position in horizontaler Richtung in Bezug auf die optische Achse ihres jeweils zugeordneten Sekundäroptikelementes (S1, S2, S3, S4) aufweisen, indem eine erste Gesamtanordnung (G1) der Lichtaustrittsflächen (L11, L12, L13) eine erste definierte Position in Bezug auf die optische Achse (BS1) ihrer Sekundäroptik (S1) einnimmt, und wobei eine zweite/dritte/vierte ... n-te Gesamtanordnung (G2, G3, G4) in Bezug auf die optische Achse (BS2, BS3, BS4) ihrer Sekundäroptik (S2, S3, S4) im Vergleich zu der ersten Gesamtanordnung (G1) um den halben/einfachen/1,5-fachen/ ... ((n-1)/2)-fachen Normalabstand (A) zwischen zwei benachbarten Lichtaustrittsflächen eines LED-Lichtquellen-Moduls (M; M1, M2, M3, M4) verschoben ist.

**2.** Scheinwerfer nach Anspruch 1, **dadurch gekennzeichnet, dass** die Lichtaustrittsflächen (L; L11, L12, L13, L21, L22, L23, L31, L32, L33, L41, L42, L43; L1, L2, L3, L4, L5, L6, L7, L8, L9) der Primäroptikelemente (P; P11, P12, P13, P21, P22, P23, P31, P32, P33, P41, P42, P43; P1, P2, P3, P4, P5, P6 P7, P8, P9) rechteckförmig ausgebildet sind.

**3.** Scheinwerfer nach Anspruch 1 oder 2, **dadurch gekennzeichnet, dass** alle Lichtaustrittsflächen (L; L11, L12, L13, L21, L22, L23, L31, L32, L33, L41, L42, L43; L1, L2, L3, L4, L5, L6, L7, L8, L9) eine idente Gestalt aufweisen.

**4.** Scheinwerfer nach einem der Ansprüche 1 bis 3, **dadurch gekennzeichnet, dass** die Lichtaustrittsflächen (L; L11, L12, L13, L21, L22, L23, L31, L32, L33, L41, L42, L43; L1, L2, L3, L4, L5, L6, L7, L8, L9) aller LED-Lichtquellen parallel zueinander und mit identischer Ausrichtung angeordnet sind.

**5.** Scheinwerfer nach einem der Ansprüche 1 bis 4, **dadurch gekennzeichnet, dass** bei drei oder mehr LED-Lichtquellen pro LED-Lichtquellen-Modul (M; M1, M2, M3, M4) die Abstände (A) zwischen Lichtaustrittsflächen (L; L11, L12, L13, L21, L22, L23, L31, L32, L33, L41, L42, L43; L1, L2, L3, L4, L5, L6, L7, L8, L9) benachbarter LED-Lichtquellen gleich sind.

**6.** Scheinwerfer nach einem der Ansprüche 1 bis 5, **dadurch gekennzeichnet, dass** alle Abstände (A) zwischen Lichtaustrittsflächen (L; L11, L12, L13, L21, L22, L23, L31, L32, L33, L41, L42, L43; L1, L2, L3, L4, L5, L6, L7, L8, L9) benachbarter LED-Lichtquellen über den gesamten Scheinwerfer identisch sind.

**7.** Scheinwerfer nach einem der Ansprüche 1 bis 6, **dadurch gekennzeichnet, dass** die Lichtaustrittsflächen (L; L11, L12, L13, L21, L22, L23, L31, L32, L33, L41, L42, L43; L1, L2, L3, L4, L5, L6, L7, L8, L9) in vertikaler Richtung stehend, mit größerer Höhe (h) als Breite (b), ausgebildet sind.

**8.** Scheinwerfer nach einem der Ansprüche 1 bis 7, **dadurch gekennzeichnet, dass** benachbarte Lichtaustrittsflächen (L; L11, L12, L13, L21, L22, L23, L31, L32, L33, L41, L42, L43; L1, L2, L3, L4, L5, L6, L7, L8, L9) der LED-Lichtquellen eines LED-Lichtquellen-Moduls (M; M1, M2, M3, M4) einen Normalabstand (A) zueinander aufweisen, welcher der Breite (B) einer Lichtaustrittsfläche (L; L11, L12, L13, L21, L22, L23, L31, L32, L33, L41, L42, L43; L1, L2, L3, L4, L5, L6, L7, L8, L9) entspricht.

9. Scheinwerfer nach einem der Ansprüche 1 bis 8, **dadurch gekennzeichnet, dass** die Lichtaustrittsflächen (L; L11, L12, L13, L21, L22, L23, L31, L32, L33, L41, L42, L43; L1, L2, L3, L4, L5, L6, L7, L8, L9) aller LED-Lichtquellen-Module (M; M1, M2, M3, M4) des Scheinwerfers (SWl, SWr) jeweils auf einer Seite einer Vertikalebene (VE) durch die optische Achse (BS1, BS2, BS3, BS4) der ihnen jeweils zugeordneten Sekundäroptik (S1, S2, S3, S4) angeordnet sind.

10. Scheinwerfer nach einem der Ansprüche 1 bis 9, **dadurch gekennzeichnet, dass** genau eine Lichtaustrittsfläche (L11, L11') aller Lichtaustrittsflächen eines Scheinwerfers (SWr, SW1) die optische Achse (BS1) der ihr zugeordneten Sekundäroptik (S1) schneidet.

11. Scheinwerfer nach einem der Ansprüche 1 bis 10, **dadurch gekennzeichnet, dass** jedes LED-Lichtquellen-Modul (M) aus zumindest zwei horizontalen Zeilen von Lichtaustrittsflächen (L1, L2, L3, L4, L5, L6, L7, L8, L9) besteht, wobei jede Zeile zumindest eine Lichtaustrittsfläche (L1, L2, L3; L4, L5, L6; L7, L8, L9) von zumindest einer LED-Lichtquelle umfasst.

12. Scheinwerfer nach Anspruch 11, **dadurch gekennzeichnet, dass** drei horizontalen Zeilen vorgesehen sind, wobei die obere und die untere Zeile in horizontaler Richtung zueinander verschoben sind, und wobei die Zeilen einen vertikalen Abstand zueinander aufweisen, derart dass Lichtaustrittsflächen (L7, L8, L9) der unteren Zeile unterhalb der freien Zwischenflächen zwischen den Lichtaustrittsflächen (L1, L2, L3) der oberen Zeile liegen, und wobei in der mittleren Zeile schräg verlaufende Lichtaustrittsflächen (L4, L5, L6) vorgesehen sind, die sich die jeweils von einen oberen Zwischenfläche zu einer in horizontaler Richtung unmittelbar folgenden unteren Zwischenfläche erstrecken, wobei sich vorzugsweise die schrägen Lichtaustrittsflächen (L4, L5, L6) in die Zwischenflächen zwischen zwei Lichtaustrittsflächen (L1, L2, L3; L7, L8, L9) hinein erstrecken.

13. Scheinwerfer nach einem der Ansprüche 1 bis 12, **dadurch gekennzeichnet, dass** eine LED-Lichtquelle (LQE) eine Primäroptik (P) und zumindest zwei horizontal übereinander angeordnete Leuchtdioden (LED1, LED2) umfasst, welche Leuchtdioden (LED1, LED2) unabhängig voneinander ansteuerbar sind, und wobei jede der zumindest zwei Leuchtdioden (LED1, LED2) über die Lichtaustrittsfläche des Primäroptikelementes (P) als horizontale Lichtsegmente - innerhalb des vertikalen von dem Primäroptikelemente abgebildeten Lichtsegmentes - abgebildet werden.

14. Scheinwerfer nach einem der Ansprüche 1 bis 13, **dadurch gekennzeichnet, dass** jede Leuchtdiode einer LED-Lichtquelle separat ansteuerbar ist.

15. Fahrzeugscheinwerfersystem mit zwei Scheinwerfern (SWl, SWr) nach einem der Ansprüche 1 bis 14, wobei der in einem in das Fahrzeug eingebauten Zustand linke Scheinwerfer (SW1) auf der Fahrbahn den linken Teil der Lichtverteilung und der rechte Scheinwerfer (SWr) den rechten Teil der Lichtverteilung erzeugt, uns wobei zumindest jede LED-Lichtquelle der beiden Scheinwerfer separat ansteuerbar ist.

**Claims**

1. An LED motor vehicle headlight (SW1, SWr) for generating a dynamic light pattern and comprising a number of LED light sources, wherein each of the LED light sources consists of at least one light-emitting diode (LED1, LED2) and a primary optical element (P; P11, P12, P13, P21, P22, P23, P31, P32, P33, P41, P42, P43; P1, P2, P3, P4, P5, P6, P7, P8, P9), into which primary optical element (P; P11, P12, P13, P21, P22, P23, P31, P32, P33, P41, P42, P43; P1, P2, P3, P4, P5, P6 P7, P8, P9) the at least one light-emitting diode (LED1, LED2) couples in light, and the coupled-in light at least partially re-emerges from a light emitting surface (L; L11, L12, L13, L21, L22, L23, L31, L32, L33, L41, L42, L43; L1, L2, L3, L4, L5, L6, L7, L8, L9) of said primary optical element, wherein said LED light sources are disposed in at least two LED light source modules (M; M1, M2, M3, M4), and each of said LED light source modules (M; M1, M2, M3, M4) comprises two or more LED light source, and each of said LED light source modules (M; M1, M2, M3, M4) has a secondary optical element (S1, S2, S3, S4) which projects the light segments produced by said light-emitting surfaces (L; L11, L12, L13, L21, L22, L23, L31, L32, L33, L41, L42, L43; L1, L2, L3, L4, L5, L6, L7, L8, L9) of said primary optical elements (P; P11, P12, P13, P21, P22, P23, P31, P32, P33, P41, P42, P43; P1, P2, P3, P4, P5, P6 P7, P8, P9) - when the headlight is installed in the vehicle - in a zone ahead of the vehicle, wherein said secondary optical elements (S1, S2, S3, S4) of said LED light source modules (M; M1, M2, M3, M4) and the arrangement of said light-emitting surfaces (L; L11, L12, L13, L21, L22, L23, L31, L32, L33, L41, L42, L43; L1, L2, L3, L4, L5, L6, L7, L8, L9) of said primary optical elements are matched in such a manner that said light segments of the individual LED light source modules (M; M1, M2, M3, M4) are horizontally offset from each other, such that a light pattern is generated by appropriate horizontal overlapping of the individual light segments or by juxtaposition and overlapping of the individual light segments, and wherein the individual LED light sources can be separately controlled,

**characterized in that**

neighboring light emitting surfaces (L; L11, L12, L13, L21, L22, L23, L31, L32, L33, L41, L42, L43; L1, L2, L3, L4, L5, L6, L7, L8, L9) of said primary optical elements (P; P11, P12, P13, P21, P22, P23, P31, P32, P33, P41, P42, P43; P1, P2, P3, P4, P5, P6 P7, P8, P9) of an LED light source module (M; M1, M2, M3, M4) are horizontally juxtaposed with spacing (A), and wherein the individual LED light source modules (M; M1, M2, M3, M4) have identical secondary optical elements (S1, S2, S3, S4), wherein the general arrangement (G1, G2, G3, and G4) of said light emitting surfaces (L; L11, L12, L13, L21, L22, L23, L31, L32, L33, L41, L42, L43; L1, L2, L3, L4, L5, L6, L7, L8, L9) of an LED light source module (M; M1, M2, M3, M4) assumes a defined position relative to the optical axis (X) of said secondary optical element (S1, S2, S3, S4) in the horizontal direction, and wherein the different general arrangements of the individual LED light source modules (M; M1, M2, M3, M4) assume different defined positions in the horizontal direction relative to the optical axis of the respective secondary optical element (S1, S2, S3, S4) assigned thereto, wherein a first general arrangement (G1) of said light emitting surfaces (L11, L12, L13) assumes a first defined position with reference to the optical axis (BS1) of said secondary optical element (S1) thereof, and wherein a second/third/fourth... $n^{th}$ general arrangement (G2, G3, G4) in relation to said optical axis (BS2, BS3, and BS4) of its secondary optical element (S2, S3, S4) thereof compared with the first general arrangement (G1) is offset by a factor of one half of, one times/1,5 times/...((n-1)/2)-times the perpendicular distance (A) between two adjacent light emitting surfaces of an LED light source module (M; M1, M2, M3, M4).

2. The headlight as defined in claim 1, **characterized in that** said light-emitting surfaces (L; L11, L12, L13, L21, L22, L23, L31, L32, L33, L41, L42, L43; L1, L2, L3, L4, L5, L6, L7, L8, L9) of said primary optical elements (P; P11, P12, P13, P21, P22, P23, P31, P32, P33, P41, P42, P43; P1, P2, P3, P4, P5, P6 P7, P8, P9) are rectangular in shape.

3. The headlight as defined in claim 1 or claim 2, **characterized in that** all of said light-emitting surfaces (L; L11, L12, L13, L21, L22, L23, L31, L32, L33, L41, L42, L43; L1, L2, L3, L4, L5, L6, L7, L8, L9) have an identical shape.

4. The headlight as defined in any one of claims 1 to 3, **characterized in that** said light emitting surfaces (L; L11, L12, L13, L21, L22, L23, L31, L32, L33, L41, L42, L43; L1, L2, L3, L4, L5, L6, L7, L8, L9) of all LED light sources are disposed parallel to each other and in identical alignment.

5. The headlight as defined in any one of claims 1 to 4, **characterized in that** in the case of three or more LED light sources per LED light source module (M; M1, M2, M3, M4) the spaces (A) between said light emitting surfaces (L; L11, L12, L13, L21, L22, L23, L31, L32, L33, L41, L42, L43; L1, L2, L3, L4, L5, L6, L7, L8, L9) of adjacent LED light sources are identical.

6. The headlight as defined in any one of claims 1 to 5, **characterized in that** all of said spaces (A) between said light emitting surfaces (L; L11, L12, L13, L21, L22, L23, L31, L32, L33, L41, L42, L43; L1, L2, L3, L4, L5, L6, L7, L8, L9) of adjacent LED light sources are identical throughout the headlight.

7. The headlight as defined in any one of claims 1 to 6, **characterized in that** said light emitting surfaces (L; L11, L12, L13, L21, L22, L23, L31, L32, L33, L41, L42, L43; L1, L2, L3, L4, L5, L6, L7, L8, L9) extend in a vertical direction and are designed with a greater height (h) than width (b).

8. The headlight as defined in any one of claims 1 to 7, **characterized in that** adjacent light emitting surfaces (L; L11, L12, L13, L21, L22, L23, L31, L32, L33, L41, L42, L43; L1, L2, L3, L4, L5, L6, L7, L8, L9) of said LED light sources of an LED light source module (M; M1, M2, M3, M4) are spaced by a perpendicular distance (A) relatively to each other, which is equal to the width (B) of a light emitting surface (L; L11, L12, L13, L21, L22, L23, L31, L32, L33, L41, L42, L43; L1, L2, L3, L4, L5, L6, L7, L8, L9).

9. The headlight as defined in any one of claims 1 to 8, **characterized in that** said light emitting surfaces (L; L11, L12, L13, L21, L22, L23, L31, L32, L33, L41, L42, L43; L1, L2, L3, L4, L5, L6, L7, L8, L9) of all LED light source modules (M; M1, M2, M3, M4) of said headlight (SW1, SWr) are each disposed on one side of a vertical plane (VE) through the optical axis (BS1, BS2, BS3, and BS4) of the respective secondary optical element (S1, S2, S3, S4) assigned thereto.

10. The headlight as defined in any one of claims 1 to 9, **characterized in that** exactly one of said light emitting surfaces (L11, L11§) of all of said light emitting surfaces of a headlight (SWr, SW1) intersects the optical axis (BS1) of the respective secondary optical element (S1) assigned thereto.

11. The headlight as defined in any one of claims 1 to 10, **characterized in that** each LED light source module (M) consists of at least two horizontal rows of light emitting surfaces (L1, L2, L3, L4, L5, L6, L7, L8, L9), each row comprising at least one light emitting surface (L1, L2, L3; L4, L5, L6; L7, L8, or L9) of at least one LED light source.

12. The headlight as defined in claim 11, **characterized in that** three horizontal rows are provided, wherein the upper and lower rows are offset in the horizontal direction relatively to each other, and the rows are at a vertical distance from each other such that light emitting surfaces (L7, L8, L9) in the lower row are disposed below the free spaces between said light emitting surfaces (L1, L2, L3) in the upper row, and wherein in the middle row tilted light emitting surfaces (L4, L5, L6) are provided which extend from an upper space to a lower space immediately following on in the horizontal direction, wherein preferably said tilted light emitting surfaces (L4, L5, L6) extend into said spaces between two light emitting surfaces (L1, L2, L3; L7, L8, L9).

13. The headlight as defined in any one of claims 1 to 12, **characterized in that** an LED light source (LQE) comprises a primary optical element (P) and at least two light-emitting diodes (LED1, LED2) disposed in the horizontal direction one above the other, which light-emitting diodes (LED1, LED2) can be independently controlled, and wherein each of the at least two light-emitting diodes (LED1, LED2) is reproduced via said light emitting surface of said primary optical element (P) as horizontal light segments within the vertical light segment reproduced by said primary optical element.

14. The headlight as defined in any one of claims 1 to 13, **characterized in that** each light-emitting diode of an LED light source can be separately controlled.

15. A vehicle headlight system comprising two headlights (SW1, SWr) as defined in any one of claims 1 to 14, wherein, when installed in the vehicle, the left-hand headlight (SW1) produces the left-hand portion of the light pattern and the right-hand headlight (SWr) produces the right-hand portion of the light pattern, and at least each LED light source in the two headlights can be separately controlled.

**Revendications**

1. Projecteur de véhicule automobile à DEL (SWl, SWr) destiné à produire une répartition de lumière dynamique, comportant un nombre de sources lumineuses à DEL, une source lumineuse à DEL se composant respectivement d'au moins une diode électroluminescente (LED1, LED2) et d'un élément optique primaire (P; P11, P12, P13, P21, P22, P23, P31, P32, P33, P41, P42, P43; P1, P2, P3, P4, P5, P6, P7, P8, P9), dans lequel élément optique primaire (P ; P11, P12, P13, P21, P22, P23, P31, P32, P33, P41, P42, P43 ; P1, P2, P3, P4, P5, P6, P7, P8, P9) la au moins une diode électroluminescente (LED1, LED2) injecte de la lumière, et la lumière injectée ressortant à nouveau au moins partiellement d'une surface de sortie de lumière (L ; L11, L12, L13, L21, L22, L23, L31, L32, L33, L41, L42, L43 ; L1, L2, L3, L4, L5, L6, L7, L8, L9) de l'élément optique primaire,
les sources lumineuses à DEL étant agencées en au moins deux modules de sources lumineuses à DEL (M ; M1, M2, M3, M4), chaque module de sources lumineuses à DEL (M ; M1, M2, M3, M4) comportant au moins deux sources lumineuses à DEL, chaque module de sources lumineuses à DEL (M ; M1, M2, M3, M4) présentant une optique secondaire (S1, S2, S3, S4), laquelle reproduit les segments de lumière produits par les surfaces de sortie de lumière (L ; L11, L12, L13, L21, L22, L23, L31, L32, L33, L41, L42, L43; L1, L2, L3, L4, L5, L6, L7, L8, L9) des éléments optiques primaires (P ; P11, P12, P13, P21, P22, P23, P31, P32, P33, P41, P42, P43 ; P1, P2, P3, P4, P5, P6, P7, P8, P9) - à l'état de montage du projecteur dans un véhicule - dans une zone située en avant du véhicule, les éléments optiques secondaires (S1, S2, S3, S4) du module de sources lumineuses à DEL (M ; M1, M2, M3, M4) et l'agencement des surfaces de sortie de lumière (L ; L11, L12, L13, L21, L22, L23, L31, L32, L33, L41, L42, L43 ; L1, L2, L3, L4, L5, L6, L7, L8, L9) des éléments optiques primaires étant coordonnés de telle sorte que les segments de lumière issus des modules de sources de lumière à DEL (M ; M1, M2, M3, M4) individuels sont reproduits en quinconce les uns par rapport aux autres en direction horizontale, et ce de telle sorte qu'il en résulte une répartition de lumière par superposition horizontale correspondante des segments de lumière individuels ou par une juxtaposition et superposition des segments de lumière individuels, et les sources lumineuses à DEL individuelles étant aptes à être commandées séparément,

**caractérisé par le fait que**

des surfaces de sortie de lumière (L ; L11, L12, L13, L21, L22, L23, L31, L32, L33, L41, L42, L43 ; L1, L2, L3, L4, L5, L6, L7, L8, L9) adjacentes des éléments optiques primaires (P ; P11, P12, P13, P21, P22, P23, P31, P32, P33, P41, P42, P43 ; P1, P2, P3, P4, P5, P6, P7, P8, P9) d'un module de sources lumineuses à DEL (M ; M1, M2, M3, M4) sont agencées les unes à côté des autres selon un intervalle horizontal (A), et

les modules de sources lumineuses à DEL (M ; M1, M2, M3, M4) individuels présentent des éléments optiques secondaires (S1, S2, S3, S4) identiques,

l'agencement général (G1, G2, G3, G4) des surfaces de sortie de lumière (L ; L11, L12, L13, L21, L22, L23, L31, L32, L33, L41, L42, L43 ; L1, L2, L3, L4, L5, L6, L7, L8, L9) d'un module de sources lumineuses à DEL (M ; M1, M2, M3, M4) par rapport à l'axe optique (X) de l'élément optique secondaire (S1, S2, S3, S4) occupant une position définie dans la direction horizontale, et les différents agencements généraux des modules de sources lumineuses à DEL (M ; M1, M2, M3, M4) individuels présentant une position définie différente de l'un à l'autre en direction horizontale par rapport à l'axe optique de leur élément optique secondaire (S1, S2, S3, S4) qui leur est respectivement affecté, en ce que

un premier agencement général (G1) des surfaces de sortie de lumière (L11, L12, L13) occupe une première position définie par rapport à l'axe optique (BS1) de son optique secondaire (S1), et en comparaison du premier agencement général (G1), un deuxième/troisième/quatrième...$n^{ième}$ agencement général (G2, G3, G4) étant décalé par rapport à l'axe optique (BS2, BS3, BS4) de son optique secondaire (S2, S3, S4) de la moitié/d'une fois/d'une fois et demi/... de $((n-1)/2)$ fois l'intervalle normal (A) entre deux surfaces de sortie de lumière adjacentes d'un module de sources lumineuses à DEL (M ; M1, M2, M3, M4).

2. Projecteur selon la revendication 1, **caractérisé par le fait que** les surfaces de sortie de lumière (L ; L11, L12, L13, L21, L22, L23, L31, L32, L33, L41, L42, L43 ; L1, L2, L3, L4, L5, L6, L7, L8, L9) des éléments optiques primaires (P ; P11, P12, P13, P21, P22, P23, P31, P32, P33, P41, P42, P43 ; P1, P2, P3, P4, P5, P6, P7, P8, P9) sont formées rectangulaires.

3. Projecteur selon l'une des revendications 1 ou 2, **caractérisé par le fait que** toutes les surfaces de sortie de lumière (L ; L11, L12, L13, L21, L22, L23, L31, L32, L33, L41, L42, L43 ; L1, L2, L3, L4, L5, L6, L7, L8, L9) présentent une forme identique.

4. Projecteur selon l'une des revendications 1 à 3, **caractérisé par le fait que** les surfaces de sortie de lumière (L ; L11, L12, L13, L21, L22, L23, L31, L32, L33, L41, L42, L43 ; L1, L2, L3, L4, L5, L6, L7, L8, L9) de toutes les sources lumineuses à DEL sont agencées parallèlement les unes aux autres et selon une orientation identique.

5. Projecteur selon l'une des revendications 1 à 4, **caractérisé par le fait que**, en cas de présence d'au moins trois sources lumineuses à DEL par module de sources lumineuses à DEL (M ; M1, M2, M3, M4), les intervalles (A) entre les surfaces de sortie de lumière (L ; L11, L12, L13, L21, L22, L23, L31, L32, L33, L41, L42, L43 ; L1, L2, L3, L4, L5, L6, L7, L8, L9) de sources lumineuses à DEL adjacentes sont identiques.

6. Projecteur selon l'une des revendications 1 à 5, **caractérisé par le fait que** tous les intervalles (A) entre les surfaces de sortie de lumière (L ; L11, L12, L13, L21, L22, L23, L31, L32, L33, L41, L42, L43 ; L1, L2, L3, L4, L5, L6, L7, L8, L9) de sources lumineuses à DEL adjacentes sont identiques sur l'ensemble du projecteur.

7. Projecteur selon l'une des revendications 1 à 6, **caractérisé par le fait que** les surfaces de sortie de lumière (L ; L11, L12, L13, L21, L22, L23, L31, L32, L33, L41, L42, L43 ; L1, L2, L3, L4, L5, L6, L7, L8, L9), debout en direction verticale, sont formées avec une hauteur (h) supérieure à la largeur (b).

8. Projecteur selon l'une des revendications 1 à 7, **caractérisé par le fait que** des surfaces de sortie de lumière (L ; L11, L12, L13, L21, L22, L23, L31, L32, L33, L41, L42, L43 ; L1, L2, L3, L4, L5, L6, L7, L8, L9) adjacentes des sources lumineuses à DEL d'un module de sources lumineuses à DEL (M ; M1, M2, M3, M4) présentent un intervalle normal (A) les unes par rapport aux autres, qui correspond à la largeur (B) d'une surface de sortie de lumière (L ; L11, L12, L13, L21, L22, L23, L31, L32, L33, L41, L42, L43 ; L1, L2, L3, L4, L5, L6, L7, L8, L9).

9. Projecteur selon l'une des revendications 1 à 8, **caractérisé par le fait que** les surfaces de sortie de lumière (L ; L11, L12, L13, L21, L22, L23, L31, L32, L33, L41, L42, L43 ; L1, L2, L3, L4, L5, L6, L7, L8, L9) de tous les modules de sources lumineuses à DEL (M ; M1, M2, M3, M4) du projecteur (SW1, SWr) sont agencées respectivement sur un côté d'un plan vertical (VE) traversant l'axe optique (BS1, BS2, BS3, BS4) de l'optique secondaire (S1, S2, S3, S4) qui leur est respectivement affectée.

10. Projecteur selon l'une des revendications 1 à 9, **caractérisé par le fait que** juste une surface de sortie de lumière (L11, L11') de toutes les surfaces de sortie de lumière d'un projecteur (SW1, SWr) coupe l'axe optique (BS1) de l'optique secondaire (S1) qui leur est affectée.

11. Projecteur selon l'une des revendications 1 à 10, **caractérisé par le fait que** chaque module de sources lumineuses à DEL (M; M1, M2, M3, M4) se compose d'au moins deux lignes horizontales de surfaces de sortie de lumière (L1, L2, L3, L4, L5, L6, L7, L8, L9), chaque ligne comportant au moins une surface de sortie de lumière (L1, L2, L3, L4, L5, L6, L7, L8, L9) d'au moins une source lumineuse à DEL.

12. Projecteur selon la revendication 11, **caractérisé par le fait que** trois lignes horizontales sont prévues, les lignes supérieure et inférieure étant décalées l'une par rapport à l'autre en direction horizontale, et les lignes présentant un intervalle vertical les unes par rapport aux autres, de telle sorte que des surfaces de sortie de lumière (L7, L8, L9) de la ligne inférieure se trouvent au-dessous des interfaces libres entre les surfaces de sortie de lumière (L1, L2, L3) de la ligne supérieure, et, dans la ligne du milieu étant prévues des surfaces de sortie de lumière (L4, L5, L6) s'étendant inclinées, qui s'étendent respectivement d'une interface supérieure à une interface inférieure immédiatement suivante dans la direction horizontale, les surfaces de sortie de lumière inclinées (L4, L5, L6) s'étendant de préférence dans les interfaces entre deux surfaces de sortie de lumière (L1, L2, L3 ; L7, L8, L9).

13. Projecteur selon l'une des revendications 1 à 12, **caractérisé par le fait qu'**une source lumineuse à DEL (LQE) comporte une optique primaire (P) et au moins deux diodes électroluminescentes superposées horizontalement (LED1, LED2), lesquelles diodes électroluminescentes (LED1, LED2) sont aptes à être commandées indépendamment l'une de l'autre, et chacune des au moins deux diodes électroluminescentes (LED1, LED2) étant reproduite par l'intermédiaire de la surface de sortie de lumière de l'élément optique primaire (P) sous forme de segments de lumière horizontaux - à l'intérieur du segment de lumière vertical reproduit par l'élément optique primaire.

14. Projecteur selon l'une des revendications 1 à 13, **caractérisé par le fait que** chaque diode électroluminescente d'une source lumineuse à DEL est apte à être commandée séparément.

15. Système de projecteur de véhicule comportant deux projecteurs (SW1, SWr) selon l'une des revendications 1 à 14, dans lequel le projecteur gauche (SW1), à l'état monté dans le véhicule, produit sur la chaussée la partie gauche de la répartition de lumière et le projecteur droit (SWr) produit la partie droite de la répartition de lumière, et dans lequel au moins chaque source lumineuse à DEL des deux projecteurs est apte à être commandée séparément.

Fig. 1

Fig. 2

Fig. 3

Fig. 4

Fig. 5

Fig. 6

Fig. 7

Fig. 8

Fig. 9a

Fig. 9b

Fig. 9c

Fig. 9d

Fig. 10

Fig. 11

Fig. 12

L1 L4' L2 L5' L3
L6'
L5
L6
L4
L6"
L4"
L5"
L7 L8
L9

## Fig. 13

LQE

P
EK1
LED1

L
LED2
EK2

## Fig. 14

LQE

P
EK
LED1

L
LED2

## Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004007241 A2
- US 20080198574 A1